# EUROPÄISCHE PATENTSCHRIFT

(11) **EP 0 672 490 B1**
(45) Veröffentlichungstag und Bekanntmachung des Hinweises auf die Patenterteilung: **17.06.1998**
(21) Anmeldenummer: 94120922.3
(22) Anmeldetag: 30.12.1994
(51) Int. Cl.: B23B 31/02

(54) **Ausrichtadapter**
Aligning adaptor
Adaptateur d'alignement

(30) Priorität: 16.02.1994 DE 4404725
(43) Veröffentlichungstag der Anmeldung: 20.09.1995
(73) Patentinhaber: August Beck GmbH & Co., D-72474 Winterlingen (DE)
(72) Erfinder: Basteck, Andreas, Dr., D-71686 Remseck (DE)
(74) Vertreter: Kinkelin, Ulrich, Dipl.-Ing.

(56) Entgegenhaltungen:
- EP-A- 0 235 327

## Beschreibung

Die Erfindung betrifft einem Werkzeughalter gemäß dem Oberbegriff des Anspruchs 1. Eine solche Vorrichtung ist in der europäischen Patentschrift 0 235 327 beschrieben. Gemäß Spalte 1, Zeilen 30 - 34, hat die bekannte Vorrichtung eine einfache Konstruktion, die eine schnelle und genaue Ausrichtung der Achse eines Werkzeugs ermöglicht, und sie soll dabei einfach zu handhaben sein. Im wesentlichen ist vorgesehen, daß eine - einzige - Stellschraube vorgesehen ist, die gemaß Blatt 37.6 der amtlichen Akten direkt an der Umfangsfläche des einen Halterteils anliegt, und zwar ohne Druckstück zwischen der Schraube und der Umfangsfläche. Nun mag die Konstruktion zwar einfach sein. Dies jedoch auf Kosten der Genauigkeit der Einstellmöglichkeit, denn die Achsfehler liegen sehr häufig im Bereich kleiner als 10 Mikrometer.

Die Erfindung geht von der Erkenntnis aus, daß ein Ausrichtadapter nur einmal hergestellt und bezahlt werden muß, von ihm aber ggf. erzeugte Fehler sich in jedem gefertigten Werkstück niederschlagen, so daß es besser, eine aufwendigere Konstruktion zu wählen.

Erfindungsgemäß wird diese Aufgabe der besseren Beseitigung von Axialfehlern durch die aus dem Hauptanspruch ersichtlichen Merkmale gelöst.

Die Erfindung läßt sich mit Vorteilen beim Feinbohren und Feinreiben verwenden, wie es z.B. bei der Herstellung von Ventilführungen notwendig ist. Ferner bei Stufenbohrungen auf diesem Gebiet sowie sehr langen Reibwerkzeugen. Die Erfindung vermeidet, daß die Bohrung am Eintauchende mit einer anderen Qualität hergestellt wird als am Austauchende. Die Erfindung schafft auch einen wesentlich ruhigeren Eintauchprozeß. Die Standzeit der Schneiden der Schnittwerkzeuge wird verlängert, was ebenso für die Verschleiß- und Führungsleisten gilt. In der Fertigung erhält man nunmehr z.B. zu einem an sich ja leicht außerordentlich rund herstellbaren Ventilschaft oder einem sonstigen, kreiszylindrischen Gegenstand eine ebenso runde Bohrung. Man braucht also nicht hinzunehmen, daß ein praktisch ideal kreiszylindrischer Schaff in einem ovalen oder eiförmigen Lochquerschnitt liegt.

Die Erfindung wird nunmehr anhand bevorzugter Ausführungsbeispiele erläutert. In der Zeichnung zeigen:

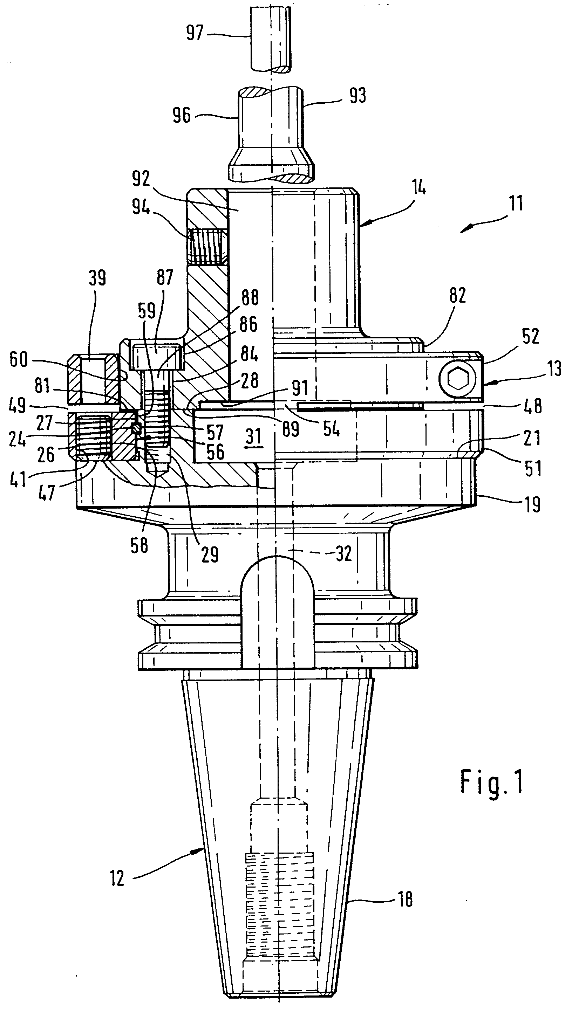

- Fig. 1: eine Seitenansicht der Vorrichtung, teilweise geschnitten als Zusammenstellungszeichnung,

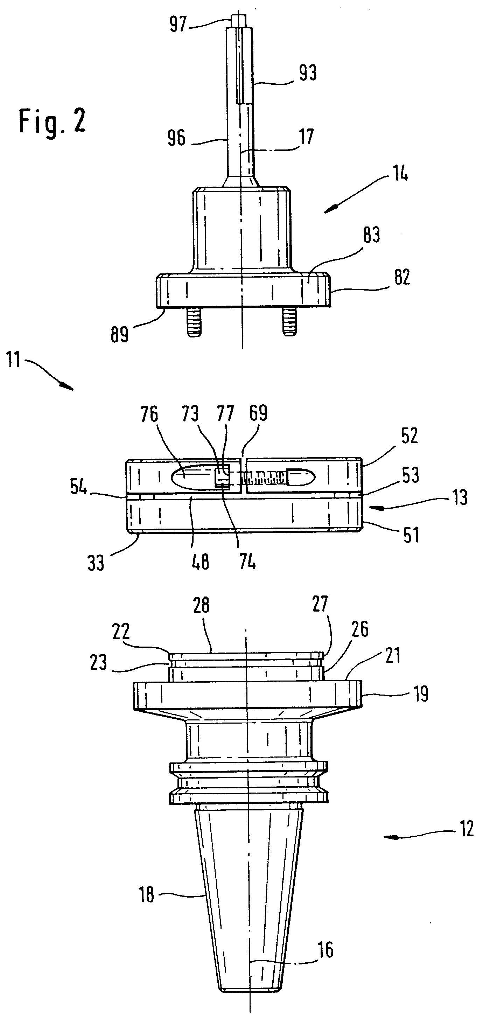

- Fig. 2: die Seitenansicht von Fig. 1, jedoch in explodiertem Zustand und verdrehtem Ausgleichring,

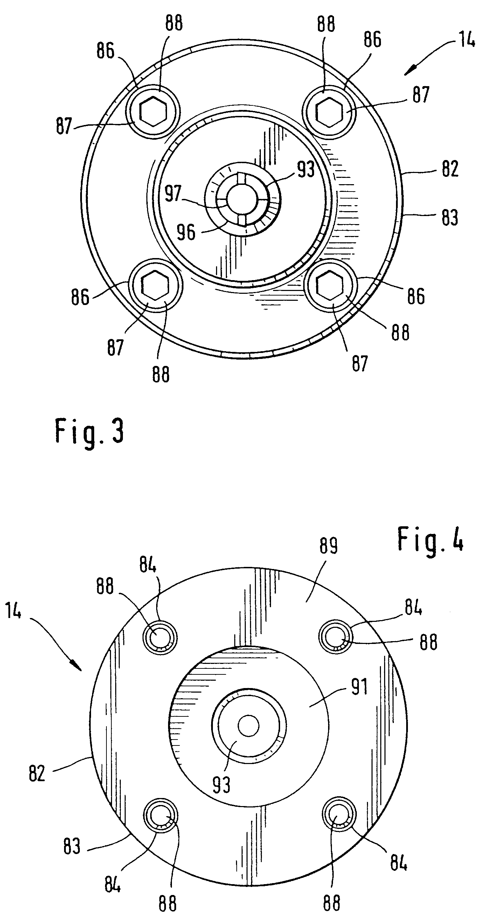

- Fig. 3: die Draufsicht auf den obersten Teil von Fig. 2,
- Fig. 4: die Untersicht zu Fig. 3,

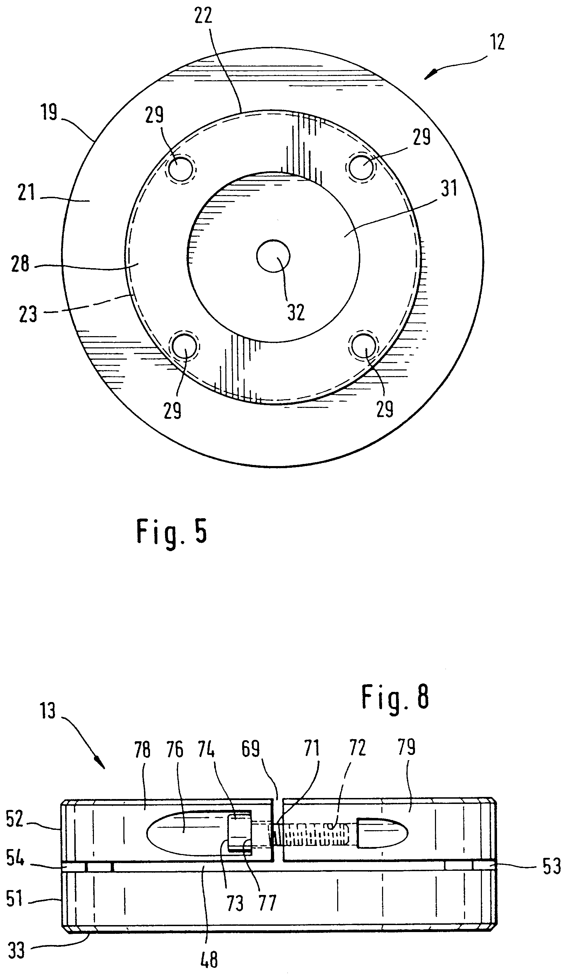

- Fig. 5: die Draufsicht auf den untersten Teil von Fig. 2,
- Fig. 6: die Draufsicht auf den Ausgleichring`
- Fig. 7: die Untersicht zu Fig. 6,
- Fig. 8: eine Ansicht gemäß dem Pfeil 8 in Fig. 6,
- Fig. 9: eine schematische, nicht maßstäbliche Darstellung zur Erläuterung der Wirkung beim Ausgleich von Axialfehlern,
- Fig. 10: eine schematische, nicht maßstäbliche Darstellung zum Vorgehen bei der Beseitigung eines Taumelfehlers.

Ein Werkzeughalter 11 umfaßt im großen und ganzen einen Schaftteil 12, einen Ausgleichring 13 und einen Adapter 14. Der Schaftteil 12 hat eine geometrische Längsachse 16, die mit der nicht dargestellten geometrischen Längsachse einer nicht dargestellten Spindel fluchtet oder auch nicht fluchtet. Fluchtet er, dann hat wenigstens dieser Teil weder einen Achsfehler noch taumelt er. Stimmen allerdings diese beiden geometrischen Längsachsen schon nicht, dann kann die Erfindung auch diesen Fehler beseitigen. Häufiger ist der Fall, daß die geometrischen Längsachsen 16 und 17 nicht fluchten und auch dieser Fehler kann mit der Erfindung behoben werden.

Der Schaftteil 12 hat einen üblichen Konus 18. Nach oben verbreitert er sich in einen tellerartigen Flansch 19, dessen Oberseite eine geschliffene Ringfläche 21 hat, die senkrecht zur geometrischen Längsachse 16 steht. Aus dieser springt ein koaxialer Ansatz 22 nach oben, der in geringem Abstand von der Ringfläche 21 eine koaxiale Umfangsnut 23 aufweist. In dieser liegt ein O-Ring 24, ragt aber über die Umfangsnut 23 nach außen mit etwa der Hälfte seines Querschnitts-Umfangs hinaus. Die Umfangsnut 23 teilt den Umfang des Ansatzes 22 in eine untere Zylinderfläche 26 und eine obere Zylinderfläche 27. Beide Zylinderflächen 26, 27 sind geschliffen und liegen koaxial zur geometrischen Längsachse 16. Die untere Zylinderfläche 26 hat zu einer ihr gegenüber liegenden, später noch zu erläuternden Zylinderbohrung die Passung G6/H7. Die obere Zylinderfläche 27 hat aus später noch zu erläuternden Gründen einen kleineren Umfang wie die untere Zylinderfläche 26. Bei den Genauigkeitsangaben in diesem Zusammenhang ist zu berücksichtigen, daß Fehler in der Achsparallelität oder des Taumelns sich im Bereich unterhalb von 10 Mikrometern befinden und in diesem Zusammenhang Genauigkeitserläuterungen zu betrachten sind.

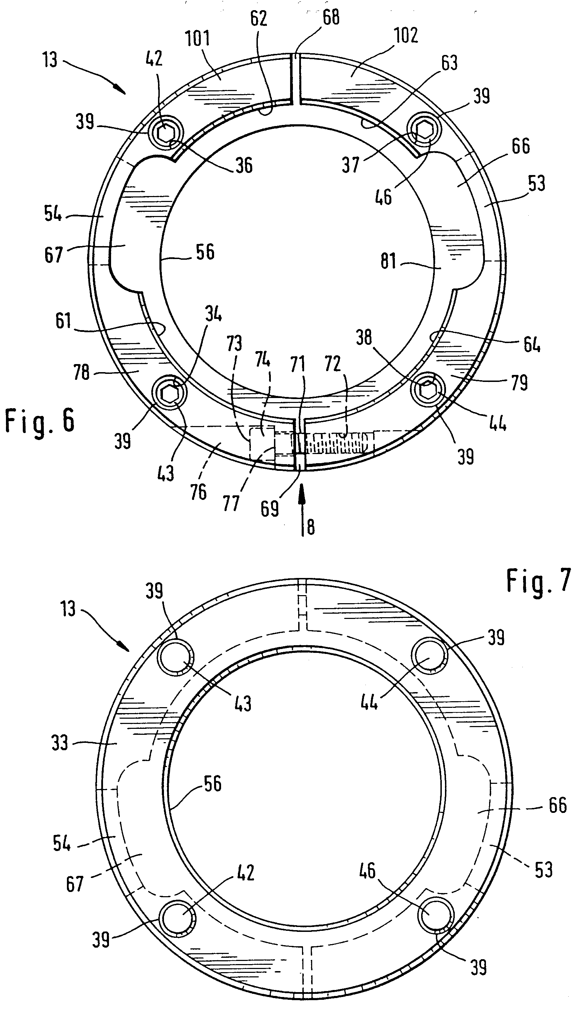

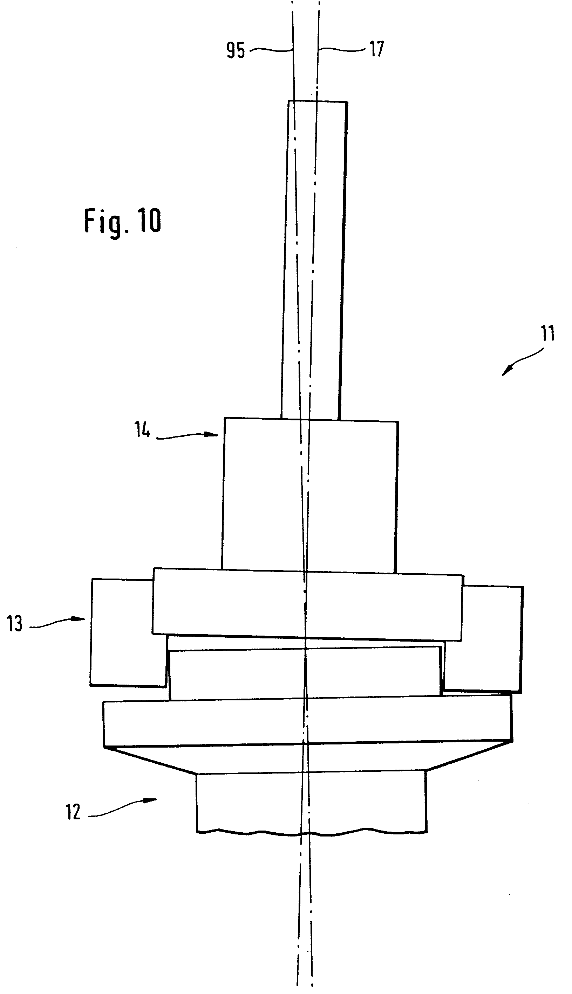

Der Ansatz 22 hat auf seiner Oberseite eine geschliffene Ringfläche 28, die senkrecht zur geometrischen Längsachse 16 steht. In der Ringfläche 28 gleichmäßig winkelmäßig verteilt sind achsparallele Gewindelöcher als Sacklöcher vorgesehen. Der von der Ringfläche 28 eingeschlossene kreisförmige Bereich 31 ist axial nach unten versetzt, so daß er mit Sicherheit nicht über die Ringfläche 28 hochsteht. Koaxial ist eine Kühlmittelbohrung 32 vorgesehen. Der Ausgleichring 13 hat an seiner Unterseite eine Ringfläche 33, die in ihrer Ausdehnung etwa der Ringfläche 21 entspricht. Die Ringfläche 33 liegt außerhalb der Ringfläche 28. Durch den Ausgleichring 13 sind vier winkelmäßig gleichmäßig verteilte Durchgangsbohrungen 39 gebohrt, die gemäß Fig. 7 im äußeren Randbereich der Ringfläche 33 liegen und die im montierten Zustand zumindest einigermaßen parallel zu den geometrischen Längsachsen 16 und 17 sind. In ihrem oberen Bereich sind die Durchgangsbohrungen 34, 36, 37, 38 mit glatten Wänden versehen, während der untere Bereich jeweils ein Innengewinde 41 aufweist. Getrennt in glatte Wände/Innengewinde werden die Durchgangsbohrungen 34, 36, 37, 38 durch demnächst zu erläuternde Schlitze. In den Innengewinden stecken Druckschrauben 42, 43, 44, 46, deren untere Stirnfläche 47 beim Anziehen einer - oder mehrerer - der Druckschrauben 42, 43, 44, 46 sich auf der Ringfläche 21 abstützt und den Ausgleichring 13 so zu kippen vermag, wie dies in Fig. 10 weit übertrieben dargestellt ist.

Der Ausgleichring 13 ist der Höhe nach durch zwei schmale Radialschlitze 48, 49 in ein Unterdeck 51 und ein Oberdeck 52 geteilt. Das Oberdeck 52 und das Unterdeck 51 hängen über Brücken 53, 54 zusammen, die gemäß Fig. 6 etwa auf 2 Uhr 30 und 9 Uhr 30 liegen. Das Unterdeck 51 ist ein massiver, durchgehender Ring, der Biegebeanspruchungen aufnehmen kann.

Das Unterdeck 51 hat auf seiner kreiszylindrischen, zumindest im wesentlichen zu den geometrischen Längsachsen 16, 17 konzentrischen, geschliffenen Innenwand 56 eine Innennut 57, die in montiertem Zustand im wesentlichen auf gleicher Höhe wie die Umfangsnut 23 liegt. In dieser liegt der O-Ring 24 mit dem Rest seines Querschnitts. Die Innennut 57 teilt die Innenwand 56 in eine untere Innenzylinder-Fläche 58 und eine obere Innenzylinder-Fläche 59, so daß erstere der unteren Zylinderfläche 26 und letztere der oberen Zylinderfläche 27 gegenüberliegt. Es haben also 26 und 58 miteinander die H7/G6-Passung und zwar aus dem vor allem aus Fig. 10 hervorgehenden Grund: Würde sowohl die untere Zylinderfläche 26 als auch die untere Innenzylinder-Fläche 58 als auch die obere Zylinderfläche 27 als auch die obere Innenzylinder-Fläche 59 so eng toleriert, daß eine sehr genaue axiale Verschiebung einerseits zwar möglich ist, andererseits aber praktisch kein radiales Spiel vorhanden ist, dann könnte die in Fig. 10 dargestellte Schiefstellung, die in Wirklichkeit weit unter einer Bogenminute liegt, gar nicht erreicht werden, weil diese Zapfen/Bohrung-Verkantungen gar nicht möglich wären. Verglichen mit 26 und 58 hat die obere Zylinderfläche 27 und die obere Innenzylinder-Fläche 59 keine oder praktisch keine Führungsaufgaben.

Die Druckschrauben 42, 43, 44, 46 sind nicht höher wie das Unterdeck 51, das gleich hoch ist, wie das Oberdeck 52, sodaß die Radialschlitze 48, 49 sich etwa auf halber Höhe befinden. Die obere Innenzylinderfläche 60 umfaßt vier Zylinderabschnitte 61, 62, 63, 64, die gemäß Fig. 6 auf einem größeren Durchmesser liegen wie 26 und 58. Im winkelmäßigen Bereich der Brücken 53, 54 sind den Querschnitt des Oberdecks 52 erheblich schwächende Einfräsungen 66, 67 vorgesehen, die gemäß Fig. 6 die Form von Halbovalen haben. Zwei gemäß Fig. 6 auf 12 Uhr und auf 6 Uhr in einer axialen Ebene liegende Schlitze 68, 69 teilen das Oberdeck weiterhin bis zu den Schlitzen 48, 49 hinunter. Der Schlitz 69 wird vom Schaft 71 einer Zugschraube durchquert, deren Gewinde gemäß Fig. 6 rechts in ein Innengewinde 72 einer Tangentialbohrung eingeschraubt ist, die senkrecht zum Schlitz 69 steht. Das andere Ende der Zugschraube hat ein nach links ragenden Kopf 74, der sich in einem Nest 76 abstützt, welches links vom Schlitz 69 vorgesehen ist. Im Nest 76 kann sich der Kopf 74 an einer im wesentlichen radial liegenden Stützfläche 77 abstützen. Zieht man die Zugschraube 73 an, dann wird der Schlitz 69 enger, und zwar umso mehr, je mehr man die Zugschraube 73 anzieht. Etwa um die Brücken 53, 54 schwenken die Sektoren 78, 79 aufeinander zu und diese Teile bewegen sich mehr oder minder in Richtung des Schlitzes 68. Da der O-Ring 24 die Umfangsnut 23 und die Innennut 57 überbrückt, hält sich der Ausgleichring 13 am Ansatz 22, sofern seine Rastwirkung nicht überschritten wird.

In Blickrichtung von Fig. 6 einwärts der Zylinderabschnitte 61, 62, 63, 64 ist das Unterdeck 51 mit einer radialen, geschliffenen Ringfläche 81 versehen, die zumindest im wesentlichen senkrecht zur geometrischen Längsachse 16 steht. Der Ausgleichring kann mit unmerklichem radialem Spiel um den Ansatz 22 gedreht werden.

Der Adapter 14 hat einen zur geometrischen Längsachse 17 koaxialen, nach außen kragenden Umfangsflansch 82. Seine kreiszylindrische Außenumfangs-Fläche 83 ist genau geschliffen und paßt mit vergleichsweise erheblichem Spiel zwischen die Zylinderabschnitte 61, 62, 63, 64. Die Außenumfangs-Fläche 83 ist koaxial zur geometrischen Längsachse 17. Im Umfangsflansch 62 sind achsparallele Durchgangsbohrungen 84 vorgesehen, die an ihrem oberen Ende einen Schraubenkopfsitz 86 haben, in dem ein Schraubenkopf 87 einer Zugschraube 88 sitzt, deren Schaft die Durchgangsbohrungen 84 durchquert. Die vier Durchgangsbohrungen sind deckungsgleich zu den Gewindelöchern 29. In letzteren sind die Zugschrauben 88 mit ihrem Außengewinde eingeschraubt. Die Durchgangsbohrungen 84 münden unten in einer Kreisringfläche 89, die geschliffen ist und senkrecht zur geometrischen Längsachse 17 steht. Sie liegt auf der Ringfläche 28 auf, gegen die sie durch die Zugschrauben 88 gezogen werden kann. Sie liegt dagegen nicht oder nur unwesentlich auf der Ringfläche 81 auf. Innerhalb der Kreisringfläche 89 ist ein nach oben zurückspringender Vertiefungsring 91 vorgesehen, der keine darunterliegende Fläche berührt.

Zentral im Adapter 14 ist eine koaxiale Durchgangsbohrung 92 vorgesehen, in der der Schaft eines Werkzeugs 93 steckt, festgehalten durch eine Querschraube 94. Das Werkzeug 93 hat eine untere kreiszylindrische Meßfläche 96 und eine obere kreiszylindrische Meßfläche 97, die beide geschliffen sind und ganz genau parallel zur geometrischen Längsachse des Werkzeugs 93 liegen.

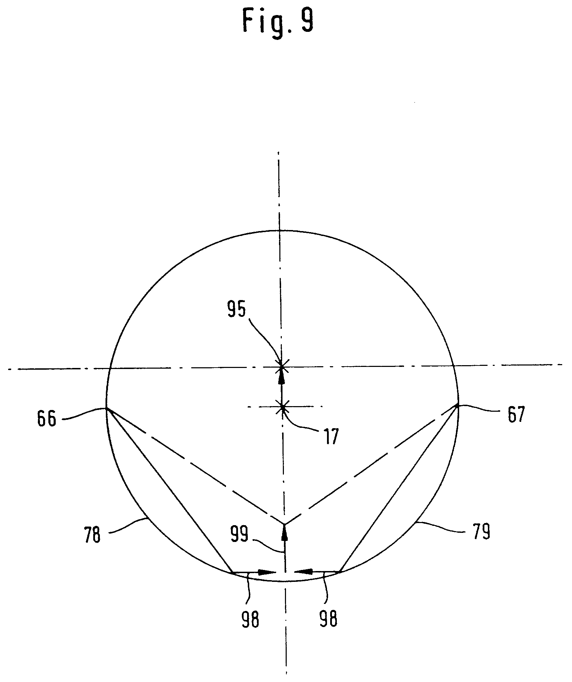

In den meisten Fällen ist die geometrische Längsachse 17 nicht parallel zur geometrischen Längsachse 16, und die geometrische Längsachse 16 kann auch mit der geometrischen Achse der Werkzeugmaschinen-Spindel nicht übereinstimmen. Es wird nun beschrieben, wie verfahren wird, wenn die geometrische Längsachse 17 nicht parallel zur geometrischen Längsachse der Spindel ist. Die Erläuterung geschieht anhand der Fig. 9, die der Deutlichkeit halber stark übertrieben gezeichnet ist. Die Werkzeugmaschine hat eine geometrische Spindelachse 95, deren Fortsetzung die geometrische Längsachse 17 bilden soll. Zunächst hat sie noch den aus Fig. 9 ersichtlichen Abstand. Man zieht nun die Zugschrauben 88 so an, daß die Kreisringfläche 89 fest gegen die Ringfläche 28 gepreßt wird. Die Spannung der Zugschrauben 88 hat jedoch noch nicht ihre endgültige Zugspannung. Vielmehr ist die Zugspannung um den Betrag kleiner, der erlaubt, die Ringfläche 28 relativ zur Kreisringfläche 89 in einem Bereich von 0 - 200 µ zu verschieben. Dann wird der Werkzeughalter 11 gedreht und ein Meßfühler an die Meßfläche 96 angelegt. Man sieht nun, nach welcher Seite hin die geometrische Längsachse 17 den größten Ausschlag hat. Dorthin dreht man nun den Ausgleichsring, und zwar so daß der Schlitz 69 dorthin zeigt. Es wird lediglich der Ausgleichsring 13 gedreht und sonst nichts. Dann zieht man die Zugschraube 73 an. Dabei wird der Schlitz 69 enger und die Sektoren 78 und 79, hier dargestellt durch zwei Kreissegmente, bewegen sich gemäß den Pfeilen 98 sowohl aufeinander zu als auch gemäß dem Pfeil 99 einwärts. Die Zylinderabschnitte 61, 64 drücken also die Außenumfangsfläche 83 großflächig umfaßt um eine Wegstrecke gemäß der Länge des Pfeils 99, so daß die geometrische Längsachse 17 in die geometrische Längsachse 95 der Werkzeugmaschinen-Spindel fällt. Als Gegenhalt dienen hierbei die Sektoren 101, 102 beiderseits des Schlitzes 68. Man vermeidet dadurch den Slip-Stick-Effekt, so daß sich beim Anziehen der Zugschraube 73 zunächst einmal gar nichts tut und dann plötzlich die Kreisringfläche 89 zu weit verrutscht. Die gestrichelten und ausgezogenen Geraden in Fig. 9 stellen Näherungen der in Wirklichkeit kreisrunden Sektoren 78 und 79 dar.

Zusätzlich zur soeben beschriebenen mangelnden Koaxialität können auch Winkelfehler kommen. Das Werkzeug 93 taumelt dann und seine geometrische Längsachse 17 wandert auf einem Kreiskegel. Die Taumelamplitude ist im Bereich der Meßfläche 97 am größten. Gemäß Fig. 10 erkennt man die geometrische Längsachse 95 der Werkzeugmaschinen-Spindel. Ehe man an die Beseitigung des Taumelns geht, sollten die Zugschrauben 88 voll angezogen und die anhand der Fig. 9 beschriebenen Vorgänge abgeschlossen sein. Entgegen der lediglich schematisch aufzufassenden Fig. 10 liegen nun die Kreisringfläche 89 und die Ringfläche 28 mit vollem Druck aneinander und könnten auch durch Anziehen der Zugschraube 73 nicht mehr gegeneinander versetzt werden.

Man dreht nun wieder den Werkzeughalter 11 um seine Achse, indem man die Werkzeugspindel dreht. Man legt dann an die Meßfläche 97 wiederum einen Meßtaster an. Nach einer Seite hin, in der Fig. 10 nach rechts, ergibt sich dann ein maximaler Ausschlag. Man dreht nun den Ausgleichsring 13 so, daß eine seiner Druckschrauben 42, 43, 44, 46 dort steht, dreht diese in das Innengewinde 41 hinein, so daß ihre untere Stirnfläche 47 auf der Ringfläche 21 aufsteht und dreht nun diese Druckschraube 42 oder 43 oder 44 oder 46 soweit hinein, bis die geometrische Längsachse 95 mit der geometrischen Längsachse 17 fluchtet. Da der O-Ring 24 elastisch ist und es sich ohnehin nur um µ-Beträge handelt, macht dies der O-Ring 24 mit. Diese Winkelbewegung erreicht man weniger z.B. durch Verbiegen des Umfangs des Flansches 82, sondern vielmehr längt man die Zugschrauben 88 dort, wo sich die geometrische Längsachse 17 am meisten hinneigt.

Natürlich kann man - obwohl dies nicht notwendig ist - zunächst einmal den Fehler mangelnder Koaxialität teilweise beseitigen und dann teilweise den Winkelfehler (Taumeln) und dann iterativ weiter vorgehen, bis beide Fehler beseitigt sind.

Statt des Konus 18 können auch andere Aufnahmen verwendet werden.

Statt der Passung G6/H7 kann auch eine andere Passung wie H8/J7 verwendet werden (Toleranzfeldverschiebung). Es ist eine Spielpassung, also keine Übergangspassung und vollends keine Preßpassung vorgesehen.

Die Einfräsungen 66, 67 können auch andere Gestalt wie z. B. die von Halbkreisen haben.

Aus Kostenersparnisgründen kann der Ausgleichsring 13 vereinfacht hergestellt sein: Man schneidet den Schlitz 68 nicht ein, so daß die Sektoren 101, 102 massiv zusammenhängen. Zusätzlich kann auch der Radialschlitz 49 nicht eingearbeitet sein, so daß 101 und 102 massiv mit dem Unterdeck 51 verbunden sind.

## Patentansprüche

1. Werkzeughalter (11) zum Ausgleich von Achsfehlern
mit einem Schaftteil (12)
mit einer kreiszylindrischen, zu Bezugsflächen des Schaftteils (12) koaxialen Außenzylinderfläche, und mit einer ersten Radialfläche,
mit einem Ausgleichsring (13), dessen kreiszylindrische, koaxialen Innenzylinderfläche (58, 59) mit Spiel auf der Außenzylinderfläche (26, 27) sitzt, rotierbar auf dieser ist,
mit einer Sicherungsvorrichtung, die den Ausgleichsring (13) gegen axiale Bewegung gegenüber dem Schaftteil (12) sichert,
mit einer Adaptervorrichtung (14), die einerseits eine Werkzeugaufnahme für ein Werkzeug (93) aufweist und andererseits eine zweite Radialfläche aufweist, die der ersten Radialfläche gegenüberliegt, sowie eine kreiszylindrische Außenfläche aufweist die zum Werkzeug (93) koaxial ist,
mit achsparallelen Schrauben, die die Adaptervorrichtung (14) gegen den Schaftteil (12) ziehen,
mit einer kreiszylindrischen Innenfläche (60) am Ausgleichsring (13), die der kreiszylindrischen Außenfläche (82) der Adaptervorrichtung (14) mit Spiel gegenüberliegt,
mit einer am Ausgleichsring (13) vorgesehenen Schraubvorrichtung (87, 29), mit der die Koaxialität der Adaptervorrichtung (14) relativ zum Schaftteil (12) zumindest teilweise beeinflußbar ist,
gekennzeichnet durch folgende Merkmale:
a) Der Ausgleichring (13) hat zumidest einen nicht durchgehenden Radialschlitz (48, 49), so daß seine kreiszylindrische Innenfläche in zwei Teilflächen (58, 59) aufgeteilt ist, von denen die erste der kreiszylindrischen Außenfläche (26, 27) des Schaftteils (12) und die zweite der kreiszylindrischen Außenfläche (82) Adaptervorrichtung (14) gegenüberliegt und somit zwei Ringsegmente (51, 52) entstehen.
b) Das Ringsegment (52) der zweiten Teilfläche (59) hat zumindest einen in der axialen Ebene liegenden Schlitz (68, 69).
c) Den zumindest einen in der axialen Ebene liegenden Schlitz (69, 68) überbrückt eine Schraube (73), die zumindest im wesentlichen in einer radialen Ebene liegt.

2. Werkzeughalter nach Anspruch 1, dadurch gekennzeichnet, daß der Radialschlitz (48, 49) den Ausgleichsring (13) der Höhe nach im Verhältnis 1:1 ± 70 % teilt.

3. Werkzeughalter nach Anspruch 1, dadurch gekennzeichnet, daß das den Radialschlitz (48, 49) aufweisende erste Ringsegment (51) eine Länge von 250° bis 80° hat.

4. Werkzeughalter nach Anspruch 1, dadurch gekennzeichnet, daß der Radialschlitz (48, 49) das Ringsegment (51) im Verhältnis 1:1 ± 80 % teilt.

5. Werkzeughalter nach Anspruch 1, dadurch gekennzeichnet, daß der Ausgleichsring (13) einstückig ist.

6. Werkzeughalter nach Anspruch 1, dadurch gekennzeichnet, daß das Ringsegment (51) in seinem Wurzelbereich mit je einer Schwächung (66, 67) vorgesehen ist, die eine Soll-Biegestelle bildet.

7. Werkzeughalter nach Anspruch 6, dadurch gekennzeichnet, daß die Schwächung (66, 67) auf der Innenseite des ersten Ringsegments (51) liegt.

8. Werkzeughalter nach einem oder mehreren der vorhergehenden Ansprüche, dadurch gekennzeichnet, daß gegenüber dem ersten Ringsegment (51) ein zweites, zumindest dem ersten ähnliches, Ringsegment (52) vorgesehen ist.

9. Werkzeughalter nach Anspruch 8, dadurch gekennzeichnet, daß das zweite Ringsegment (52) ein federnder Gegenhalt für das erste Ringsegment (51) ist.

10. Werkzeughalter nach Anspruch 1, dadurch gekennzeichnet, daß die Schraube (87, 88) senkrecht zum Radialschlitz (48, 49) verläuft.

11. Werkzeughalter nach Anspruch 1 oder 10, dadurch gekennzeichnet, daß beiderseits des Radialschlitzes (48, 49) Durchgangsbohrungen (84) vorgesehen sind, von denen die eine ein Innengewinde (29) hat und die andere in einem Schraubenkopfsitz (86) mündet

12. Werkzeughalter nach Anspruch 1, dadurch gekennzeichnet, daß zum Ausgleich eines Taumelfehlers zumindest eine Druckschraube (87, 88) vorgesehen ist, die zumindest im wesentlichen achsparallel verläuft, einerseits am Ausgleichsring (13) angreift und andererseits am Schaftteil (12) angreift, und mit der die zweite Radialfläche relativ zur ersten Radialfläche geringfügig außer Parallelität bringbar ist.

13. Werkzeughalter nach Anspruch 12, dadurch gekennzeichnet, daß der Schaftteil (12) gegenüber dem Ausgleichsring (13) einen im wesentlichen radialen Ringflansch (19) aufweist, der die andere Angriffsvorrichtung für die Druckschraube (42, 43, 44, 46) ist.

14. Werkzeughalter nach Anspruch 13, dadurch gekennzeichnet, daß der Ringflansch (19) eine Radialfläche (21) aufweist.

15. Werkzeughalter nach Anspruch 12, dadurch gekennzeichnet, daß im Ausgleichsring (13) zumindest eine achsparallele Innengewindebohrung (29) vorgesehen ist.

16. Werkzeughalter nach Anspruch 12, dadurch gekennzeichnet, daß eine Stirnfläche (47) der Schraube (42, 43, 44, 46) auf den Schaftteil (12) drängbar ist.

17. Werkzeughalter nach Anspruch 12, dadurch gekennzeichnet, daß die Schraube (42, 43, 44, 46) eine Wurmschraube ist, die kürzer wie die Innengewindebohrung (29) ist.

18. Werkzeughalter nach Anspruch 1, dadurch gekennzeichnet, daß die Sicherungsvorrichtung eine Außen-Umfangsnut (23) im Schaftteil (12) und eine ihr gegenüberliegende Innen-tung eine Außen-Umfangsnut (23) im Schaftteil (12) und eine ihr gegenüberliegende Innen-Umfangsnut (57) im Ausgleichsring (13) umfaßt und daß überbrückend in beiden ein O-Ring liegt.

## Claims

1. Tool holder (11) comprising a shank part (12) having an apparatus for compensating for axiality faults,
comprising a circular cylindrical external cylinder surface coaxial to reference surfaces of the shank part (12), and comprising a first radial surface,
comprising a compensator ring (13) whose circular cylindrical, coaxial internal cylinder surface (58, 59) is seated with play on the external cylinder surface (26, 27) and is rotatable thereon,
comprising a securing device which secures the compensator ring (13) against axial movement relative to the shank part (12),
comprising an adapter device (14) which on the one hand has a tool mounting for a tool (93) and on the other hand has a second radial surface which lies opposite the first radial surface, and also has a circular cylindrical external surface which is coaxial to the tool (93),
comprising axially parallel screws which pull the adapter device (14) against the shank part (12),
comprising on the compensator ring (13) a circular cylindrical internal surface (60) which lies, with play, opposite the circular cylindrical external surface (82) of the adapter device (14),
comprising a screw device (87, 29) which is provided on the compensator ring (13) and by which the coaxiality of the adapter device (14) relative to the shank part (12) can be at least partly influenced,
characterized by the following features:
a) the compensator ring (13) has at least one non-continuous radial slot (48, 49), so that its circular cylindrical internal surface is divided into two part surfaces (58, 59), the first of which lies opposite the circular cylindrical external surface (26, 27) of the shank part (12) and the second of which lies opposite the circular cylindrical external surface (82) of the adapter device (14), and thus two ring segments (51, 52) are formed,
b) the ring segment (52) of the second part surface (59) has at least one slot (68, 69) lying in the axial plane,
c) the at least one slot (69, 68) lying in the axial plane is bridged over by a screw (73) which lies at least substantially in a radial plane.

2. Tool holder according to Claim 1, characterized in that the radial slot (48, 49) divides the compensator ring (13) in respect of height in the ratio 1 : 1 ± 70%.

3. Tool holder according to Claim 1, characterized in that the first ring segment (51) provided with the radial slot (48, 49) has a length of from 250° to 80°.

4. Tool holder according to Claim 1, characterized in that the radial slot (48, 49) divides the ring segment (51) in the ratio 1 : 1 ± 80%.

5. Tool holder according to Claim 1, characterized in that the compensator ring (13) is in one piece.

6. Tool holder according to Claim 1, characterized in that each ring segment (51) is provided in its root region with a weakening (66, 67) forming a predetermined bending point.

7. Tool holder according to Claim 6, characterized in that the weakening (66, 67) is situated on the inner side of the first ring segment (51).

8. Tool holder according to one or more of the preceding claims, characterized in that opposite the first ring segment (51) a second ring segment (52) is provided which is at least similar to the first.

9. Tool holder according to Claim 8, characterized in that the second ring segment (52) is a resilient hold-up support for the first ring segment (51).

10. Tool holder according to Claim 1, characterized in that the screw (87, 88) extends at right angles to the radial slot (48, 49).

11. Tool holder according to Claim 1 or 10, characterized in that on both sides of the radial slot (48, 49) a through bore (84) is provided, one of which bores has an internal screw thread (29), while the other leads into a screw head seat (86).

12. Tool holder according to Claim 1, characterized in that in order to compensate for a wobble fault at least one pressure screw (87, 88) is provided, which extends at least substantially axially parallel, which acts on one side on the compensator ring (13) and on the other side on the shank part (12), and by means of which the second radial surface can be brought slightly out of parallelism relative to the first radial surface.

13. Tool holder according to Claim 12, characterized in that the shank part (12) has, opposite the compensator ring (13), a substantially radial annular flange (19) which is the other device on which the pressure screw (42, 43, 44, 46) acts.

14. Tool holder according to Claim 13, characterized in that the annular flange (19) has a radial surface (21).

15. Tool holder according to Claim 12, characterized in that at least one axially parallel internal threaded bore (29) is provided in the compensator ring (13).

16. Tool holder according to Claim 12, characterized in that an end face (47) of the screw (42, 43, 44, 46) can be pressed onto the shank part (12).

17. Tool holder according to Claim 12, characterized in that the screw (42, 43, 44, 46) is a grub screw which is shorter than the internal threaded bore (29).

18. Tool holder according to Claim 1, characterized in that the securing device comprises an external circumferential groove (23) in the shank part (12) and an internal circumferential groove (57) facing it in the compensator ring (13), and in that an O-ring is disposed as a bridge in the two grooves.

## Revendications

1. Porte-outil (11) avec une partie de queue (12), avec un dispositif pour compenser des défauts d'axe,
- avec une surface de cylindre extérieure cylindrique ronde, coaxiale à des surfaces de référence de la partie de queue (12), et avec une première surface radiale,
- avec une bague de compensation (13), dont la surface de cylindre intérieure (58, 59), cylindrique ronde, coaxiale, s'applique avec du jeu sur la surface cylindrique extérieure (26, 27), et peut tourner sur celle-ci,
- avec un dispositif de sécurité, qui assure la bague de compensation (13) contre un mouvement axial par rapport à la partie de queue (12),
- avec un dispositif adaptateur (14), qui présente d'une part un support d'outil pour un outil (93) et d'autre part une deuxième surface radiale, qui fait face à la première surface radiale, et qui présente aussi une surface extérieure cylindrique ronde, qui est coaxiale à l'outil (93),
- avec des vis parallèles à l'axe, qui serrent le dispositif adaptateur (14) contre la partie de queue (12),
- avec une surface intérieure cylindrique ronde (60) sur la bague de compensation (13), qui fait face avec du jeu à la surface extérieure cylindrique ronde (82) du dispositif adaptateur (14),
- avec un dispositif de vissage (87, 29) prévu sur la bague de compensation (13), avec lequel la coaxialité du dispositif adaptateur (14) par rapport à la partie de queue (12) peut être au moins en partie influencée,
caractérisé par les caractéristiques suivantes:
a) la bague de compensation (13) présente au moins une fente radiale (48, 49) non continue, de telle façon que sa surface intérieure cylindrique ronde soit divisée en deux surfaces partielles (58, 59), dont la première fait face à la surface extérieure cylindrique ronde (26, 27) de la partie de queue (12) et dont la seconde fait face à la surface extérieure cylindrique ronde (82) du dispositif adaptateur (14), et qu'il se crée ainsi deux segments annulaires (51, 52);
b) le segment annulaire (52) de la seconde surface partielle (59) présente au moins une fente (68, 69) située dans le plan axial;
c) une vis (73), qui se trouve au moins sensiblement dans un plan radial, enjambe ladite au moins une fente (68, 69) se trouvant dans le plan axial.

2. Porte-outil suivant la revendication 1, caractérisé en ce que la fente radiale (48, 49) divise la bague de compensation (13) en hauteur, dans le rapport 1:1 ± 70%.

3. Porte-outil suivant la revendication 1, caractérisé en ce que le premier segment annulaire (51) présentant la fente radiale (48, 49), a une longueur de 250° à 80°.

4. Porte-outil suivant la revendication 1, caractérisé en ce que la fente radiale (48, 49) divise le segment annulaire (51) dans le rapport 1:1 ± 80%.

5. Porte-outil suivant la revendication 1, caractérisé en ce que la bague de compensation (13) est d'une seule pièce.

6. Porte-outil suivant la revendication 1, caractérisé en ce que le segment annulaire (51) est pourvu, dans la région de son sommet, respectivement d'un affaiblissement (66, 67), qui forme un point de flexion probable.

7. Porte-outil suivant la revendication 6, caractérisé en ce que l'affaiblissement (66, 67) est situé sur le côté intérieur du premier segment annulaire (51).

8. Porte-outil suivant une ou plusieurs des revendications précédentes, caractérisé en ce qu'il est prévu en face du premier segment annulaire (51), un second segment annulaire (52), au moins analogue au premier.

9. Porte-outil suivant la revendication 8, caractérisé en ce que le second segment annulaire (52) constitue un contre-appui élastique pour le premier segment annulaire (51).

10. Porte-outil suivant la revendication 1, caractérisé en ce que la vis (87, 88) est perpendiculaire à la fente radiale (48, 49).

11. Porte-outil suivant la revendication 1 ou 10, caractérisé en ce qu'il est prévu, de part et d'autre de la fente radiale (48, 49), des trous passants (84), dont l'un présente un filet intérieur (29) et dont l'autre débouche dans un siège de tête de vis (86).

12. Porte-outil suivant la revendication 1, caractérisé en ce qu'il est prévu, pour compenser un défaut de nutation, au moins une vis de pression (87, 88), qui est au moins sensiblement parallèle à l'axe, qui agit d'une part sur la bague de compensation (13) et qui agit d'autre part sur la partie de queue (12), et avec laquelle la seconde surface radiale peut être amenée légèrement hors parallélisme par rapport à la première surface radiale.

13. Porte-outil suivant la revendication 12, caractérisé en ce que la partie de queue (12) présente en face de la bague de compensation (13) une bride annulaire sensiblement radiale (19), qui constitue l'autre dispositif d'action pour la vis de pression (42, 43, 44, 46).

14. Porte-outil suivant la revendication 13, caractérisé en ce que la bride annulaire (19) présente une surface radiale (21).

15. Porte-outil suivant la revendication 12, caractérisé en ce qu'il est prévu dans la bague de compensation (13) au moins un trou fileté intérieurement (29), parallèle à l'axe.

16. Porte-outil suivant la revendication 12, caractérisé en ce qu'une surface d'extrémité (47) de la vis (42, 43, 44, 46) peut être appliquée avec force contre la partie de queue (12).

17. Porte-outil suivant la revendication 12, caractérisé en ce que la vis (42, 43, 44, 46) est une vis sans tête, qui est plus courte que le trou fileté intérieurement (29).

18. Porte-outil suivant la revendication 1, caractérisé en ce que le dispositif de sécurité comprend une rainure périphérique extérieure (23) dans la partie de queue (12) et une rainure périphérique intérieure (57), qui lui fait face, dans la bague de compensation (13), et en ce qu'un joint torique qui les enjambe est logé dans les deux.
